(19) Europäisches Patentamt
European Patent Office
Office européen des brevets

(11) EP 4 800 132 A1

(12) EUROPEAN PATENT APPLICATION
published in accordance with Art. 153(4) EPC

(43) Date of publication:
**02.09.2026 Bulletin 2026/36**

(21) Application number: **24882953.3**

(22) Date of filing: **11.10.2024**

(51) International Patent Classification (IPC):
***C22B 26/12*** *(2006.01)* ***C22B 3/12*** *(2006.01)*
***C22B 3/22*** *(2006.01)* ***H01M 10/54*** *(2006.01)*

(52) Cooperative Patent Classification (CPC):
**C22B 3/12; C22B 3/22; C22B 26/12; H01M 10/54**

(86) International application number:
**PCT/KR2024/096328**

(87) International publication number:
**WO 2025/089927 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 KR 20230142151**

(71) Applicants:
- **POSCO Holdings Inc.**
  **Pohang-si, Gyeongsangbuk-do 37859 (KR)**
- **Research Institute of Industrial Science & Technology**
  **Pohang-si, Gyeongsangbuk-do 37673 (KR)**

(72) Inventors:
- **KIM, Kyunghoon**
  **Pohang-si, Gyeongsangbuk-do 37645 (KR)**
- **LEE, Sangon**
  **Yongin-si, Gyeonggi-do 17079 (KR)**

(74) Representative: **Zacco Sweden AB**
**P.O. Box 5581**
**Löjtnantsgatan 21**
**114 85 Stockholm (SE)**

## (54) METHOD FOR RECOVERING LITHIUM

(57) A method for recovering lithium according to the present invention comprises: preparing an aqueous lithium sulfate solution; obtaining an aqueous lithium hydroxide solution from the aqueous lithium sulfate solution through a lithium sulfate-lithium hydroxide conversion process; obtaining crystallized lithium hydroxide monohydrate and a crystallization filtrate from the aqueous lithium hydroxide solution through a crystallization process; and carbonating the crystallization filtrate to obtain lithium carbonate, wherein the step of obtaining the aqueous lithium hydroxide solution from the aqueous lithium sulfate solution comprises adding sodium hydroxide to the aqueous lithium hydroxide solution when the aqueous lithium hydroxide solution satisfies Equations 1 and 2.

EP 4 800 132 A1

## Description

[TECHNICAL FIELD]

The present invention relates to a method for recovering lithium, and more specifically, to a method for recovering lithium from a lithium hydroxide crystallization filtrate.

[BACKGROUND ART]

With the rapid growth of the IT and electric vehicle markets in recent years, the demand for lithium, a key raw material for secondary batteries, is expected to increase significantly. Although the lithium market for secondary batteries is highly concentrated in Korea, China, and Japan, Korea relies entirely on imports, necessitating a stable supply method. Accordingly, technologies for extracting lithium from ore and brine are being developed.

The lithium production process currently underway in Korea generally involves extracting lithium from ore in the form of an aqueous lithium sulfate solution and converting it into an aqueous lithium hydroxide solution. This aqueous solution undergoes crystallization to produce the final product of $LiOH\text{-}H_2O$. Typically, the crystallization rate cannot reach 100%, and the resulting crystallization filtrate is carbonated and recovered back into the process in the form of lithium carbonate.

However, such conventional lithium production processes suffer from a low carbonation rate, leading to a problem where the amount of re-recovered lithium carbonate is also low.

Therefore, there is a demand for the development of a method for recovering lithium that can increase the carbonation rate.

[SUMMARY OF THE INVENTION]

[TECHNICAL PROBLEM]

An object of the present invention is to provide a method for recovering lithium that can maintain a high carbonation rate. Specifically, the present invention aims to provide a method for recovering lithium that can maximize the lithium re-recovery rate by maintaining a high carbonation rate during the process of carbonating a lithium hydroxide crystallization filtrate containing a certain level of impurities.

[TECHNICAL SOLUTION]

The present invention provides a method for recovering lithium, comprising: preparing an aqueous lithium sulfate solution; obtaining an aqueous lithium hydroxide solution from the aqueous lithium sulfate solution through a lithium sulfate-lithium hydroxide conversion process; obtaining crystallized lithium hydroxide monohydrate and a crystallization filtrate from the aqueous lithium hydroxide solution through a crystallization process; and carbonating the crystallization filtrate to obtain lithium carbonate, wherein the step of obtaining the aqueous lithium hydroxide solution from the aqueous lithium sulfate solution comprises adding sodium hydroxide to the aqueous lithium hydroxide solution when the aqueous lithium hydroxide solution satisfies the following Equations 1 and 2:

$$\text{[Equation 1] (Li concentration [g/L]) / (S concentration [g/L])} \leq 7$$

$$\text{[Equation 2] (Na concentration [g/L]) / (S concentration [g/L])} < 1.67$$

[ADVANTAGEOUS EFFECTS]

The method for recovering lithium according to the present invention has the advantage of increasing the re-recovery rate of lithium by maintaining a high carbonation rate during the process of carbonating the lithium hydroxide crystallization filtrate.

In addition, the method for recovering lithium according to the present invention has the advantage of maintaining the lithium loss rate even when the membrane lifespan of the electrodialysis process upstream of the crystallizer has expired.

[DETAILED DESCRIPTION OF THE EMBODIMENTS]

Hereinafter, embodiments of the present invention will be described in detail. However, these are presented as examples, and the present invention is not limited thereto, but is only defined by the scope of the claims to be described later.

In the present invention, when a part "includes" or "comprises" a certain component, it means that other components may be further included rather than excluding other components unless otherwise stated.

One aspect of the present invention relates to a method for recovering lithium, comprising: preparing an aqueous lithium sulfate solution; obtaining an aqueous lithium hydroxide solution from the aqueous lithium sulfate solution through a lithium sulfate-lithium hydroxide conversion process; obtaining crystallized lithium hydroxide monohydrate and a crystallization filtrate from the aqueous lithium hydroxide solution through a crystallization process; and carbonating the crystallization filtrate to obtain lithium carbonate, wherein the step of obtaining the aqueous lithium hydroxide solution from the aqueous lithium sulfate solution comprises adding sodium hydroxide to the aqueous lithium hydroxide solution when the aqueous lithium hydroxide solution satisfies the following Equations 1 and 2:

[Equation 1]

$$(\text{Li concentration [g/L]}) / (\text{S concentration [g/L]}) \leq 7$$

[Equation 2]

$$(\text{Na concentration [g/L]}) / (\text{S concentration [g/L]}) < 1.67$$

The selectivity of ion transport in a dialysis membrane of an electrodialysis process gradually decreases as usage time increases. In this case, since the impurity concentration of the aqueous lithium hydroxide solution, which is the product, increases, the crystallization rate must be lowered to meet the purity standards of the final product.

When the crystallization rate decreases, the amount of the crystallization filtrate increases, and the amount of lithium to be re-recovered in the form of lithium carbonate from the filtrate increases. Therefore, a method for optimizing the carbonation rate is required.

The method for recovering lithium according to the present invention has the advantage of maximizing the lithium recovery rate by maintaining a high carbonation rate. In addition, it has the advantage of maintaining the lithium loss rate even when the membrane lifespan of the electrodialysis process has reached its end.

**Step of preparing an aqueous lithium sulfate solution**

The method for recovering lithium according to the present invention includes a step of preparing an aqueous lithium sulfate solution.

The step of preparing the aqueous lithium sulfate solution is not limited by the present invention.

For example, the aqueous lithium sulfate solution may be obtained from one or more sources selected from the group consisting of ore, waste batteries, and salt lakes. Preferably, the aqueous lithium sulfate solution may be obtained from ore.

Specifically, the step of preparing the aqueous lithium sulfate solution may involve obtaining it in the form of an aqueous lithium sulfate solution by leaching and then purifying lithium ore through calcination and roasting processes. More specifically, the aqueous lithium sulfate solution can be obtained by mixing the calcinated lithium ore with sulfuric acid, roasting it, leaching it in water, and performing solid-liquid separation.

The specific process conditions for the step of preparing the aqueous lithium sulfate solution are not limited by the present invention.

The aqueous lithium sulfate solution may have a lithium concentration of 8 to 15 g/L, preferably 9 to 15 g/L, and more preferably 10 to 14 g/L, but is not limited thereto.

However, when the lithium concentration of the aqueous lithium sulfate solution satisfies the above range, process efficiency is excellent. This is preferable because it can suppress the occurrence of loss due to a high concentration of Li escaping as a solid moisture content during solid-liquid separation after leaching or in the purification process, and can suppress the decrease in efficiency of the electrodialysis process in the downstream process.

**Step of obtaining an aqueous lithium hydroxide solution**

The method for recovering lithium according to the present invention includes a step of obtaining an aqueous

lithium hydroxide solution from the aqueous lithium sulfate solution through a lithium sulfate-lithium hydroxide conversion process.

In one embodiment of the present invention, the lithium sulfate-lithium hydroxide conversion process may be performed by one or more methods selected from the group consisting of electrodialysis, electrolysis, and a chemical method of adding a compound.

The electrodialysis, electrolysis, and chemical methods may refer to methods commonly performed in the art.

Specifically, the lithium sulfate-lithium hydroxide conversion process may utilize electrodialysis in terms of reducing process costs and time.

When electrodialysis is used as the lithium sulfate-lithium hydroxide conversion process, an aqueous lithium hydroxide solution with higher purity can be obtained compared to a conventional causticization process, and the generation of by-products is suppressed, providing eco-friendly advantages.

More specifically, the aqueous lithium sulfate solution can be converted into an aqueous lithium hydroxide solution by introducing it into an electrodialysis apparatus including a bipolar membrane.

DI water (pure water) may be used as a solvent. The pure water is in a state where ion components in the water have been removed, and may be water in a state where ion components contained in the water, such as cations and anions, have been removed using chemical or physical mechanisms.

When electricity is applied to the bipolar electrodialysis apparatus into which the aqueous lithium sulfate solution and the pure water are introduced, hydrolysis of water, which is a concentrated liquid, occurs at the bipolar membrane, and cations and anions in the aqueous lithium sulfate solution move toward the negative electrode and positive electrode, respectively, due to the electrophoresis effect.

Referring to Reaction Scheme 1 below, $SO_4^{2-}$ can be obtained as sulfuric acid ($H_2SO_4$) by meeting with hydrogen hydrolyzed at the positive electrode side, and lithium ions moving toward the negative electrode through a cation-selective dialysis membrane can be obtained as lithium hydroxide by meeting with $OH^-$.

[Reaction Scheme 1] $$Li_2SO_4(aq.) + H_2O \rightarrow 2LiOH(aq.) + H_2SO_4(liq.)$$

In another embodiment of the present invention, in the step of obtaining the aqueous lithium hydroxide solution from the aqueous lithium sulfate solution, the lithium concentration of the aqueous lithium hydroxide solution may be 10 to 30 g/L, preferably 15 to 28 g/L, and more preferably 15 to 25 g/L.

When the lithium concentration of the aqueous lithium hydroxide solution obtained through the lithium sulfate-lithium hydroxide conversion process is within the above range, it is advantageous because it indicates that the process efficiency during the conversion process is excellent and the conversion rate is high.

If the lithium concentration of the produced aqueous lithium hydroxide solution is too high, the efficiency of the electrodialysis process decreases. Briefly, the driving force involved in the movement of ions in the electrodialysis process is basically an electric force, but diffusion due to concentration also acts across the membrane. Therefore, if the lithium concentration of the produced solution is significantly higher than that of the input solution, a large amount of diffusion occurs in the opposite direction, leading to a decrease in efficiency. If the lithium concentration of the produced aqueous lithium hydroxide solution is too low, the amount of water to be evaporated for crystallization increases, thereby increasing energy costs.

The method for recovering lithium according to the present invention includes a step of adding sodium hydroxide to the aqueous lithium hydroxide solution when the aqueous lithium hydroxide solution satisfies the following Equations 1 and 2 in the step of obtaining the aqueous lithium hydroxide solution from the aqueous lithium sulfate solution.

[Equation 1]

$$(\text{Li concentration [g/L]}) / (\text{S concentration [g/L]}) \leq 7$$

[Equation 2]

$$(\text{Na concentration [g/L]}) / (\text{S concentration [g/L]}) < 1.67$$

In the step of obtaining lithium carbonate by carbonating the crystallization filtrate to be described later, the carbonation rate is affected by the concentration ratio of S and Na impurities contained in the crystallization filtrate. For example, if the ratio of Li concentration to S concentration of the crystallization filtrate introduced into the crystallizer is low, a tendency for the carbonation rate to decrease can be observed.

While not wishing to be bound by theory, if sodium hydroxide is added when (Li concentration [g/L]) / (S

concentration [g/L]) is 7 or less, the pH of the crystallization filtrate can be maintained in a more alkaline range, and thus the carbonation rate of the filtrate can be maintained high.

In addition, even when (Na concentration [g/L]) / (S concentration [g/L]) is less than 1.67, if sodium hydroxide is added, the pH of the crystallization filtrate can be maintained in a more alkaline range, and thus the carbonation rate of the filtrate can be maintained high.

While not wishing to be bound by theory, during carbonation by introducing $CO_2$ into an aqueous lithium solution, the pH gradually decreases as lithium carbonate is produced. In such a carbonation process, carbonation is stopped when the pH of the solution reaches about 9 to 10. If the pH decreases further, the solubility of lithium carbonate increases, and the amount of lithium remaining dissolved in the carbonation filtrate increases, resulting in a decrease in the carbonation rate.

Therefore, in the present invention, before the crystallization filtrate is introduced into the crystallizer, whether or not to add sodium hydroxide to the aqueous lithium hydroxide solution is verified through Equations 1 and 2, and by appropriately adding the sodium hydroxide, a high carbonation rate is maintained during the process of carbonating the crystallization filtrate. By maintaining a high carbonation rate, there is an advantage of maximizing the lithium recovery rate.

In short, in the present invention, the ratio of Li concentration to S concentration and the ratio of Na concentration to S concentration of the aqueous lithium hydroxide solution introduced into the crystallization step, which will be described later, can be factors for determining whether or not to add sodium hydroxide.

In the present invention, the aqueous lithium hydroxide solution contains sulfate ions ($SO_4^{2-}$) as impurities.

In another embodiment of the present invention, in the step of obtaining the aqueous lithium hydroxide solution from the aqueous lithium sulfate solution, when the aqueous lithium hydroxide solution satisfies Equations 1 and 2, the sodium hydroxide may be added in an amount of 0.5 to 23 kg, preferably 1 to 20 kg, and more preferably 5 to 18 kg per 1 $m^3$ of the aqueous lithium hydroxide solution.

The sodium hydroxide may have a concentration of 40%.

Specifically, the method for recovering lithium according to the present invention can maintain a high carbonation rate, specifically a carbonation rate of 90% or more, by adding sodium hydroxide when the aqueous lithium hydroxide solution satisfies Equations 1 and 2.

**Step of obtaining crystallized lithium hydroxide monohydrate and crystallization filtrate**

The method for recovering lithium according to the present invention includes a step of obtaining crystallized lithium hydroxide monohydrate and a crystallization filtrate from the aqueous lithium hydroxide solution through a crystallization process.

The crystallization process may be performed by introducing the aqueous lithium hydroxide solution into a crystallizer, but is not limited thereto.

By introducing the aqueous lithium hydroxide solution into a crystallizer, the lithium hydroxide monohydrate is crystallized and separated into a solid phase, and in this process, a crystallization filtrate, which is a concentrated lithium hydroxide filtrate (bleeding) containing impurities, is discharged.

In short, the crystallization filtrate may contain lithium and impurities.

The impurities may include, for example, one or more selected from the group consisting of sodium (Na), calcium (Ca), barium (Ba), potassium (K), phosphorus (P), sulfur (S), and magnesium (Mg).

Specifically, the impurities include sulfur (S).

The sulfur may act as a main component determining the crystallization rate. Specifically, in the step of carbonating the crystallization filtrate to be described later, the carbonation rate may be affected by the concentration ratio of the sulfur and sodium impurities.

In another embodiment of the present invention, in the crystallization process, a crystallization rate represented by the following Equation 3 may be 80% or more, specifically 90% or more, and more specifically 95% or more.

(Amount of Li in LiOH-$H_2O$ produced per hour [kg/h]) / (Amount of Li in the input aqueous lithium hydroxide solution [kg/h]) $\times$ 100 (%) [Equation 3]

The amount of Li can be measured using an ICP analyzer.

The method for recovering lithium according to the present invention has the advantage of a high carbonation rate in the process of carbonating the crystallization filtrate by determining whether or not to add sodium hydroxide to the aqueous lithium hydroxide solution through Equations 1 and 2 before introducing the crystallization filtrate into the crystallizer and appropriately adding the sodium hydroxide.

**Step of obtaining lithium carbonate**

The method for recovering lithium according to the present invention includes a step of carbonating the crystallization filtrate to obtain lithium carbonate.

Specifically, a lithium carbonate slurry can be obtained by introducing the crystallization filtrate into a carbonator, and this can be separated into lithium carbonate and a carbonation filtrate.

In another embodiment of the present invention, the carbonation may be performed using one or more selected from the group consisting of carbon dioxide ($CO_2$) and sodium carbonate ($Na_2CO_3$).

The crystallization filtrate reacts with the carbon dioxide or the sodium carbonate inside the carbonator to obtain the lithium carbonate slurry.

Preferably, the carbonation may be performed by injecting the carbon dioxide gas into the crystallization filtrate.

The lithium carbonate slurry can be separated into solid lithium carbonate and a liquid carbonation filtrate. The method for separating the lithium carbonate slurry is not particularly limited, but may be performed, for example, through a solid-liquid separation process.

The carbonation filtrate may include one or more materials selected from the group consisting of lithium (Li), sodium (Na), calcium (Ca), barium (Ba), potassium (K), phosphorus (P), sulfur (S), and magnesium (Mg).

Through the carbonation, only lithium can be re-recovered by converting the lithium in the crystallization filtrate into lithium carbonate, excluding the impurities. Accordingly, by excluding impurities among the materials concentrated in the carbonation filtrate and re-recovering only lithium into the process, accumulation of the impurities in the process can be suppressed.

In the present invention, the lithium recovery rate based on the lithium concentration before and after the carbonation may be 85% or more, specifically 90% or more, and more specifically 95% or more. Specifically, the lithium recovery rate can be calculated through the amount of lithium in the lithium hydroxide solution before the carbonation and the amount of lithium in the carbonation filtrate after the carbonation.

While not wishing to be bound by theory, the solubility of lithium hydroxide in water may be 36 to 44 g/L based on lithium.

In addition, the solubility of lithium carbonate in water may be 2 to 3 g/L based on lithium.

Based on the solubility of the lithium hydroxide, the solubility of the lithium carbonate is 1/10 or less based on lithium. Therefore, if lithium in the aqueous lithium hydroxide solution is carbonated and precipitated as lithium carbonate, lithium carbonate can be obtained with a precipitation rate of 90% or more.

In another embodiment of the present invention, a carbonation rate represented by the following Equation 4 may be 90% or more.

{1 - [(Lithium concentration of carbonation filtrate [g/L] $\times$ Volume of carbonation filtrate [L]) / (Lithium concentration of the input aqueous lithium hydroxide solution [g/L] $\times$ Volume of the aqueous lithium hydroxide solution [L])]} $\times$ 100% [Equation 4]

In short, the method for recovering lithium according to the present invention has the advantage of a high carbonation rate. Specifically, the method for recovering lithium according to the present invention has the advantage of maintaining a high carbonation rate during the carbonation process.

In another embodiment of the present invention, the method may further include a step of dissolving the lithium carbonate obtained in the step of carbonating the crystallization filtrate and introducing it into the aqueous lithium sulfate solution.

In short, the method for recovering lithium according to the present invention may further include a step of introducing the aqueous lithium solution into the lithium sulfate-lithium hydroxide conversion process.

By dissolving the solid lithium carbonate obtained by the solid-liquid separation back into an acidic solution, an aqueous lithium solution with very low impurity levels can be obtained.

The acidic solution may be dilute sulfuric acid or $Li_2SO_4$, but is not limited thereto.

The dilute sulfuric acid may be obtained by a conventional method or generated in the lithium sulfate-lithium hydroxide conversion process, and preferably, it may be generated in the lithium sulfate-lithium hydroxide conversion process.

The dilute sulfuric acid may include, for example, one or more selected from the group consisting of lithium (Li), sodium (Na), potassium (K), and sulfur (S).

Specifically, the solid lithium carbonate may be added to water, such as pure water, and the dilute sulfuric acid may be added while stirring. At this time, the dilute sulfuric acid may be added so that the pH of the aqueous lithium solution in which the solid lithium carbonate is dissolved is 2.0 to 3.0, specifically 2.5 to 2.8.

When the aqueous lithium solution is introduced into the lithium sulfate-lithium hydroxide conversion process,

there is an advantage of improving the lithium recovery rate.

In the method for recovering lithium according to the present invention, by adding an appropriate amount of sodium hydroxide according to the concentration of impurities in the aqueous lithium hydroxide solution, specifically Na and S, a high carbonation rate can be maintained during the process of carbonating the lithium hydroxide crystallization filtrate, thereby maximizing the lithium re-recovery rate.

Preferred examples and comparative examples of the present invention will be described below. However, the following examples are only one preferred embodiment of the present invention, and the present invention is not limited to the following examples.

**Preparation Example 1**

After calcinating lithium ore, it was mixed with sulfuric acid, roasted, and then leached in water to be extracted in the form of an aqueous lithium sulfate solution through solid-liquid separation. The extracted aqueous lithium sulfate solution was converted into an aqueous lithium hydroxide solution by introducing it into an electrodialysis apparatus including a bipolar membrane. Among the components of the obtained aqueous lithium hydroxide solution, Li, Na, and S components were analyzed by ICP, and the results are shown in Table 1 below.

[Table 1]

| Component | Li | Na | S |
|---|---|---|---|
| Content (g/L) | 18.24 | 1.44 | 0.98 |

Referring to Table 1, in the aqueous lithium hydroxide solution, the ratio of (Li concentration [g/L]) / (S concentration [g/L]) according to Equation 1 was 10 or more, and thus NaOH was not added.

[Equation 1]

$$(\text{Li concentration [g/L]}) / (\text{S concentration [g/L]}) \leq 7$$

[Equation 2]

$$(\text{Na concentration [g/L]}) / (\text{S concentration [g/L]}) < 1.67$$

Thereafter, the aqueous lithium hydroxide solution was introduced into a crystallizer to obtain crystallized lithium hydroxide monohydrate and a crystallization filtrate. The components of the crystallization filtrate produced after 85% crystallization were analyzed by ICP, and the results are shown in Table 2 below.

[Table 2]

| Component | Li | Na | Ca | Ba | K | P | S | Mg |
|---|---|---|---|---|---|---|---|---|
| Content (g/L) | 29.36 | 48.51 | 0.03 | 0.001 | 3.13 | 0.000 | 33.22 | 0 |

Thereafter, the crystallization filtrate was introduced into a carbonator and reacted with $CO_2$ to obtain a lithium carbonate slurry comprising solid-phase lithium carbonate and a liquid-phase carbonation filtrate, which was then separated into the solid-phase lithium carbonate and the liquid-phase carbonation filtrate through solid-liquid separation.

After separating the lithium carbonate, the components of the liquid-phase carbonation filtrate were analyzed, and the results are shown in Table 3 below.

[Table 3]

| Component | Li | Na | Ca | Ba | K | P | S | Mg |
|---|---|---|---|---|---|---|---|---|
| Content (g/L) | 2.95 | 46.11 | 0.01 | 0 | 2.59 | 0 | 30.83 | 0 |

The separated solid lithium carbonate was dissolved in a dilute sulfuric acid solution produced in the electrodialysis process and introduced into the front end of the lithium sulfate-lithium hydroxide conversion process.

The lithium concentration of the solution subjected to the carbonation process, specifically the carbonation filtrate, was calculated using the following Equation 4. Since the volume of the aqueous solution before and after the carbonation reaction is substantially the same, the recovery rate was calculated to be 90%.

{1 - [(Lithium concentration of carbonation filtrate [g/L] × Volume of carbonation filtrate [L]) / (Lithium concentration of the input aqueous lithium hydroxide solution [g/L] × Volume of the aqueous lithium hydroxide solution [L])]} × 100% [Equation 4]

**Preparation Examples 2 to 18 and Examples 1 to 10**

After obtaining aqueous lithium hydroxide solutions (crystallizer feed solutions) in the same manner as in Preparation Example 1, Li, Na, and S components therein were analyzed by ICP, and concentration ratios according to Equations 1 and 2 were calculated, the results of which are shown in Table 4 below. In this case, for the Preparation Examples (Examples 1 to 10) satisfying Equations 1 and 2, 40% NaOH was added according to the values of Equations 1 and 2 (refer to Table 5). Thereafter, the aqueous lithium hydroxide solution was introduced into a crystallizer in the same manner as in Preparation Example 1 to obtain crystallized lithium hydroxide monohydrate and a crystallization filtrate, and the crystallization filtrate was introduced into a carbonator and reacted with $CO_2$ to obtain a lithium carbonate slurry including solid lithium carbonate and a liquid carbonation filtrate, which was then separated into solid lithium carbonate and a liquid carbonation filtrate through solid-liquid separation.

The concentration ratios, crystallization rates, and carbonation rates of Preparation Examples 2 to 18 were calculated in the same manner as in Preparation Example 1, and the results are shown in Table 4 below. Additionally, for the Preparation Examples (Examples 1 to 10) satisfying Equations 1 and 2, the results of the concentration ratios, crystallization rates, NaOH input amounts, and carbonation rates before and after the NaOH input are shown in Table 5 below.

At this time, the crystallization rate was calculated using the following Equation 3.

(Amount of Li in $LiOH \cdot H_2O$ produced per hour [kg/h]) / (Amount of Li in the input aqueous lithium hydroxide solution [kg/h]) × 100 (%) [Equation 3]

[Table 4]

| | Component concentration ratio of aqueous lithium hydroxide solution (crystallizer feed solution) (before NaOH input) | | LiOH Crystallization Rate | Carbonation Rate |
|---|---|---|---|---|
| | Equation 1 (Li/S concentration ratio) | Equation 2 (Na/S concentration ratio) | | |
| Preparation Example 2 | 21 | 4 | 85% | 95% |
| | 21 | 4 | 90% | 96% |
| | 21 | 4 | 95% | 96% |
| Preparation Example 3 | 10.5 | 2 | 85% | 94% |
| | 10.5 | 2 | 90% | 94% |
| | 10.5 | 2 | 95% | 95% |
| Preparation Example 4 | 7 | 1.33 | 90% | 89% |
| | 7 | 1.33 | 95% | 86% |
| Preparation Example 5 | 5.25 | 1 | 85% | 81% |
| | 5.25 | 1 | 90% | 81% |
| | 5.25 | 1 | 95% | 86% |
| Preparation Example 6 | 4.2 | 0.8 | 85% | 73% |
| | 4.2 | 0.8 | 90% | 75% |
| | 4.2 | 0.8 | 95% | 75% |

(continued)

| | Component concentration ratio of aqueous lithium hydroxide solution (crystallizer feed solution) (before NaOH input) | | LiOH Crystallization Rate | Carbonation Rate |
|---|---|---|---|---|
| | Equation 1 (Li/S concentration ratio) | Equation 2 (Na/S concentration ratio) | | |
| Preparation Example 7 | 21 | 5 | 85% | 96% |
| | 21 | 5 | 90% | 96% |
| | 21 | 5 | 95% | 98% |
| Preparation Example 8 | 10.5 | 2.5 | 85% | 96% |
| | 10.5 | 2.5 | 90% | 95% |
| | 10.5 | 2.5 | 95% | 96% |
| Preparation Example 9 | 7 | 1.67 | 85% | 93% |
| | 7 | 1.67 | 90% | 93% |
| | 7 | 1.67 | 95% | 94% |
| Preparation Example 10 | 5.25 | 1.25 | 85% | 87% |
| | 5.25 | 1.25 | 90% | 88% |
| | 5.25 | 1.25 | 95% | 86% |
| Preparation Example 11 | 4.2 | 1 | 85% | 84% |
| | 4.2 | 1 | 90% | 83% |
| | 4.2 | 1 | 95% | 86% |
| Preparation Example 12 | 20 | 4 | 85% | 96% |
| | 20 | 4 | 90% | 96% |
| | 20 | 4 | 95% | 96% |
| Preparation Example 13 | 10 | 2 | 85% | 94% |
| | 10 | 2 | 90% | 94% |
| | 10 | 2 | 95% | 95% |
| Preparation Example 14 | 6.67 | 1.33 | 85% | 89% |
| | 6.67 | 1.33 | 90% | 89% |
| | 6.67 | 1.33 | 95% | 88% |
| Preparation Example 15 | 5 | 1 | 85% | 80% |
| | 5 | 1 | 90% | 81% |
| | 5 | 1 | 95% | 88% |
| Preparation Example 16 | 4 | 0.8 | 85% | 73% |
| | 4 | 0.8 | 90% | 73% |
| | 4 | 0.8 | 95% | 78% |
| Preparation Example 17 | 3.6 | 0.4 | 85% | 56% |
| | 3.6 | 0.4 | 90% | 55% |
| | 3.6 | 0.4 | 95% | 55% |
| Preparation Example 18 | 6.56 | 1.37 | 90% | 89% |
| | 6.56 | 1.37 | 95% | 86% |

[Table 5]

| | Component concentration ratio of aqueous lithium hydroxide solution (crystallizer feed solution) (before NaOH input) | | LiOH Crystallization Rate | 40% NaOH addition amount | Carbonation rate before NaOH addition | Carbonation rate after NaOH addition |
|---|---|---|---|---|---|---|
| | Equation 1 (Li/S concentration ratio) | Equation 2 (Na/S concentration ratio) | | [kg/m$^3$] | | |
| Example 1 (Preparation Example 4) | 7 | 1.33 | 90% | 1.5 | 89% | 90% |
| | 7 | 1.33 | 95% | 1.5 | 86% | 90% |
| Example 2 (Preparation Example 5) | 5.25 | 1 | 85% | 7 | 81% | 90% |
| | 5.25 | 1 | 90% | 7.5 | 81% | 90% |
| | 5.25 | 1 | 95% | 8 | 86% | 91% |
| Example 3 (Preparation Example 6) | 4.2 | 0.8 | 85% | 13.5 | 73% | 90% |
| | 4.2 | 0.8 | 90% | 14 | 75% | 90% |
| | 4.2 | 0.8 | 95% | 14 | 75% | 90% |
| Example 4 (Preparation Example 10) | 5.25 | 1.25 | 85% | 2.5 | 87% | 90% |
| | 5.25 | 1.25 | 90% | 3.5 | 88% | 90% |
| | 5.25 | 1.25 | 95% | 3.5 | 86% | 90% |
| Example 5 (Preparation Example 11) | 4.2 | 1 | 85% | 9 | 84% | 90% |
| | 4.2 | 1 | 90% | 9.5 | 83% | 90% |
| | 4.2 | 1 | 95% | 10 | 86% | 91% |
| Example 6 (Preparation Example 14) | 6.67 | 1.33 | 85% | 0.5 | 89% | 90% |
| | 6.67 | 1.33 | 90% | 1.5 | 89% | 90% |
| | 6.67 | 1.33 | 95% | 2 | 88% | 90% |
| Example 7 (Preparation Example 15) | 5 | 1 | 85% | 7 | 80% | 90% |
| | 5 | 1 | 90% | 7.5 | 81% | 90% |
| | 5 | 1 | 95% | 8 | 88% | 90% |
| Example 8 (Preparation Example 16) | 4 | 0.8 | 85% | 13.5 | 73% | 90% |
| | 4 | 0.8 | 90% | 14 | 73% | 90% |
| | 4 | 0.8 | 95% | 14.5 | 78% | 90% |
| Example 9 (Preparation Example 17) | 3.6 | 0.4 | 85% | 22 | 56% | 90% |
| | 3.6 | 0.4 | 90% | 23 | 55% | 90% |
| | 3.6 | 0.4 | 95% | 23 | 55% | 91% |
| Example 10 (Preparation Example 18) | 6.56 | 1.37 | 90% | 0.5 | 89% | 90% |
| | 6.56 | 1.37 | 95% | 1.5 | 86% | 91% |

Referring to Table 5, it can be seen that when an appropriate amount of NaOH is added to an aqueous lithium hydroxide solution having a composition satisfying Equations 1 and 2, the carbonation rate of the crystallization filtrate is maintained high.

The present invention is not limited to the embodiments described above but can be implemented in various different forms, and those of ordinary skill in the art to which the present invention pertains will understand that the present invention can be implemented in other specific forms without changing the technical spirit or essential features of the present invention. Therefore, it should be understood that the embodiments described above are illustrative in all respects

and not restrictive.

## Claims

1. A method for recovering lithium, comprising: preparing an aqueous lithium sulfate solution; obtaining an aqueous lithium hydroxide solution from the aqueous lithium sulfate solution through a lithium sulfate-lithium hydroxide conversion process; obtaining crystallized lithium hydroxide monohydrate and a crystallization filtrate from the aqueous lithium hydroxide solution through a crystallization process; and carbonating the crystallization filtrate to obtain lithium carbonate, wherein the step of obtaining the aqueous lithium hydroxide solution from the aqueous lithium sulfate solution comprises adding sodium hydroxide to the aqueous lithium hydroxide solution when the aqueous lithium hydroxide solution satisfies the following Equations 1 and 2:

[Equation 1]

$$(\text{Li concentration [g/L]}) / (\text{S concentration [g/L]}) \leq 7$$

[Equation 2]

$$(\text{Na concentration [g/L]}) / (\text{S concentration [g/L]}) < 1.67$$

2. The method for recovering lithium of claim 1, wherein in the step of obtaining the aqueous lithium hydroxide solution from the aqueous lithium sulfate solution, the sodium hydroxide is added in an amount of 0.5 to 23 kg per 1 $m^3$ of the aqueous lithium hydroxide solution when the aqueous lithium hydroxide solution satisfies Equations 1 and 2.

3. The method for recovering lithium of claim 1, wherein the carbonating is performed using one or more selected from the group consisting of carbon dioxide ($CO_2$) and sodium carbonate ($Na_2CO_3$).

4. The method for recovering lithium of claim 1, wherein the lithium sulfate-lithium hydroxide conversion process is performed by one or more selected from the group consisting of electrodialysis, electrolysis, and chemical methods.

5. The method for recovering lithium of claim 1, wherein in the step of obtaining the aqueous lithium hydroxide solution from the aqueous lithium sulfate solution, a lithium concentration of the aqueous lithium hydroxide solution is 10 to 30 g/L.

6. The method for recovering lithium of claim 1, wherein in the crystallization process, a crystallization rate represented by the following Equation 3 is 80% or more:

$$(\text{Amount of Li in } LiOH \cdot H_2O \text{ produced per hour [kg/h]}) / (\text{Amount of Li in the input aqueous lithium hydroxide solution [kg/h]}) \times 100 (\%) \quad \text{[Equation 3]}$$

7. The method for recovering lithium of claim 1, further comprising dissolving the lithium carbonate obtained in the step of carbonating the crystallization filtrate and introducing the dissolved lithium carbonate into the aqueous lithium sulfate solution.

8. The method for recovering lithium of claim 1, wherein a carbonation rate represented by the following Equation 4 is 90% or more:

$$\{1 - [(\text{Lithium concentration of carbonation filtrate [g/L]} \times \text{Volume of carbonation filtrate [L]}) / (\text{Lithium concentration of the input aqueous lithium hydroxide solution [g/L]} \times \text{Volume of the aqueous lithium hydroxide solution [L]})]\} \times 100\% \quad \text{[Equation 4]}$$

## INTERNATIONAL SEARCH REPORT

International application No.
**PCT/KR2024/096328**

**A. CLASSIFICATION OF SUBJECT MATTER**

**C22B 26/12**(2006.01)i; **C22B 3/12**(2006.01)i; **C22B 3/22**(2006.01)i; **H01M 10/54**(2006.01)i

According to International Patent Classification (IPC) or to both national classification and IPC

**B. FIELDS SEARCHED**

Minimum documentation searched (classification system followed by classification symbols)

C22B 26/12(2006.01); C01D 15/08(2006.01); C02F 1/72(2006.01); C22B 1/00(2006.01); C22B 1/02(2006.01); C22B 3/08(2006.01); C22B 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 회수(recovery), 수산화(hydroxide), 결정화(crystallization) 및 전기투석(electrodialysis)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0058995 A (POSCO) 03 May 2023 (2023-05-03)<br>See paragraphs [0018]-[0073] and figures 1 and 2. | 1-8 |
| Y | JP 2019-081953 A (IDEMITSU KOSAN CO., LTD. et al.) 30 May 2019 (2019-05-30)<br>See paragraphs [0012]-[0052] and figures 1-4. | 1-8 |
| A | JP 2019-173106 A (JX NIPPON MINING & METALS CORP.) 10 October 2019 (2019-10-10)<br>See paragraphs [0015]-[0056] and figure 1. | 1-8 |
| A | JP 2023-135553 A (MITSUBISHI MATERIALS CORP.) 28 September 2023 (2023-09-28)<br>See paragraphs [0014]-[0051] and figures 1-5. | 1-8 |
| A | US 2022-0372594 A1 (CHON, Uong) 24 November 2022 (2022-11-24)<br>See paragraphs [0032]-[0076] and figures 1-3. | 1-8 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 January 2025** | **15 January 2025** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/096328**

| Patent document cited in search report | Publication date (day/month/year) | Patent family member(s) | Publication date (day/month/year) |
|---|---|---|---|
| KR 10-2023-0058995 A | 03 May 2023 | KR 10-2577992 B1 | 12 September 2023 |
| JP 2019-081953 A | 30 May 2019 | JP 7270130 B2 | 10 May 2023 |
| JP 2019-173106 A | 10 October 2019 | JP 6946223 B2 | 06 October 2021 |
| JP 2023-135553 A | 28 September 2023 | CN 118843704 A | 25 October 2024 |
| | | KR 10-2024-0166462 A | 26 November 2024 |
| | | WO 2023-176545 A1 | 21 September 2023 |
| US 2022-0372594 A1 | 24 November 2022 | AU 2020-426496 A1 | 01 September 2022 |
| | | AU 2024-203680 A1 | 20 June 2024 |
| | | CA 3166269 A1 | 05 August 2021 |
| | | EP 4098758 A1 | 07 December 2022 |
| | | EP 4098758 A4 | 04 January 2023 |
| | | JP 2023-512495 A | 27 March 2023 |
| | | JP 7334356 B2 | 28 August 2023 |
| | | US 11821056 B2 | 21 November 2023 |
| | | WO 2021-153816 A1 | 05 August 2021 |

Form PCT/ISA/210 (patent family annex) (July 2022)